# EUROPÄISCHE PATENTANMELDUNG

(11) **EP 1 619 090 A2**
(43) Veröffentlichungstag der Anmeldung: **25.01.2006**
(21) Anmeldenummer: 05015845.0
(22) Anmeldetag: 21.07.2005
(51) Int. Cl.: B60R 22/03

(54) **Gutbringersystem in einem Fahrzeug**

(30) Priorität: 23.07.2004 DE 102004035886
(71) Anmelder: DaimlerChrysler AG, 70567 Stuttgart (DE)
(72) Erfinder: Seiler, Bernd, 70439 Stuttgart (DE)

(57) **Zusammenfassung**

Ein Gurtbringersystem in einem Fahrzeug weist einen von einer Antriebseinheit beaufschlagten und einen Sicherheitsgurt führenden Zubringerarm auf, der zwischen einer Bereitschaftsposition und einer Greifposition verstellbar ist. Des Weiteren ist eine Sensoreinrichtung zum Detektieren eines wahren Betriebszustandes vorgesehen, in welchem der Zubringerarm in die Greifposition zu überführen ist. Die Sensoreinrichtung umfasst einen Bewegungsmelder, dessen Überwachungsbereich den Raum zwischen Türinnenseite und benachbarter Sitzlehne umfasst.

## Beschreibung

Die Erfindung bezieht sich auf ein Gurtbringersystem in einem Fahrzeug, gemäß Oberbegriff des Anspruchs 1.

Aus der DE 100 55 843 A1 geht ein Gurtbringersystem zur Bereitstellung der Schlosszunge eines Sicherheitsgurtes in einer Greifposition hervor. Derartige Gurtbringersysteme sollen die Erreichbarkeit des Sicherheitsgurtes erleichtern, insbesondere für den Fall, dass sich die Befestigung des Sicherheitsgurtes verhältnismäßig weit hinten im Fahrzeug befindet, was beispielsweise bei zweitürigen Fahrzeugen der Fall ist, deren mittlere Karosseriesäule (B-Säule) für einen verbesserten Fondeinstieg weit nach hinten versetzt ist. Das Gurtbringersystem umfasst einen Zubringerarm, an welchem der Sicherheitsgurt mit der Schlosszunge geführt ist, wobei der Zubringerarm automatisch aus einer zurückgezogenen Position in eine vorgeschobene Greifposition verstellt wird, wenn bestimmte, festgelegte Bedingungen erfüllt sind. Bei derartigen Bedingungen handelt es sich um die Sitzbelegung, die Schließsituation der Fahrzeugtüren sowie um den Anlegezustand der Sicherheitsgurte. Hierfür sind eine Reihe verschiedener Sensoren im Fahrzeug vorgesehen, welche die vorgenannten Betriebszustände zu erkennen in der Lage sind. Der Zubringerarm wird in die vorstehende Greifposition verstellt, falls über die Sensoren erkannt wird, dass der zugeordnete Sitz belegt ist, die Türen geschlossen sind und der betreffende Sicherheitsgurt noch nicht angelegt ist.

Der Zubringerarm wird für einen vorbestimmten Zeitraum in der Greifposition gehalten. Innerhalb dieses Zeitraumes muss die auf dem Sitz befindliche Person den Sicherheitsgurt ergreifen und die Schlosszunge des Sicherheitsgurtes in das Gurtschloss einführen. Nach Ablauf des Zeitraumes wird der Zubringerarm automatisch wieder in seine zurückgezogene Position verstellt. Hat die Person bis dahin den Sicherheitsgurt noch nicht ergriffen, kann der Vorteil eines bequemen Ergreifens des Sicherheitsgurtes nicht mehr wahrgenommen werden. Die Person muss weit nach hinten greifen, um den Sicherheitsgurt in der zurückgezogenen Position fassen zu können.

Der Erfindung liegt das Problem zugrunde, ein Gurtbringersystem in einem Fahrzeug mit einfachen Maßnahmen mit hohem Bedienkomfort auszubilden.

Zur Lösung der Aufgabe wird ein Gutbringersystem mit den Merkmalen des Anspruchs 1 vorgeschlagen. Die Unteransprüche geben zweckmäßige Weiterbildungen an.

Die Sensoreinrichtung, welche dem erfindungsgemäßen Gurtbringersystem zugeordnet ist, umfasst einen Bewegungsmelder, dessen Überwachungsbereich den Raum zwischen der'Türinnenseite und der unmittelbar benachbarten Sitzlehne erfasst. Mit Hilfe des Bewegungsmelders kann eine Bewegung im Überwachungsbereich festgestellt werden, insbesondere die in den Überwachungsbereich eingreifende Hand beziehungsweise der Arm der auf dem Sitz befindlichen Person, die den Sicherheitsgurt fassen möchte. Sobald eine derartige Bewegung von dem Bewegungsmelder festgestellt wird, wird ein Sensorsignal erzeugt, aufgrund dessen die dem Zubringerarm zugeordnete Antriebseinheit betätigt wird, woraufhin der Zubringerarm in seine nach vorne ragende Greifposition überführt wird. Das Sensorsignal wird hierbei zweckmäßig einer Regel- und Steuereinheit zugeführt, die auch die Antriebseinheit für den Zubringerarm steuert. Als Antriebseinheit kommen insbesondere elektrische oder hydraulische Antriebseinrichtungen in Betracht.

Der Zubringerarm wird zweckmäßig unmittelbar nach dem Feststellen einer Bewegung innerhalb des Überwachungsbereiches in seine Greifposition verstellt. Gemäß einer bevorzugten Ausführung ist vorgesehen, dass der Zubringerarm für eine definierten Zeitspanne in der Greifposition verbleibt und erst nach Ablauf dieser Zeitspanne wieder in seine Bereitschaftsposition verstellt wird. Bei dieser Zeitspanne handelt es sich typischerweise um eine Zeitspanne in der Größenordnung von beispielsweise 30 Sekunden. Der Zubringerarm wird auch für den Fall wieder in seine Bereitschaftsposition verstellt, dass die Person den herangeführten Sicherheitsgurt nicht ergriffen hat. Falls nach Ablauf der Zeitspanne doch der Sicherheitsgurt angelegt werden soll, ist es lediglich erforderlich, wieder in den Überwachungsbereich einzugreifen, woraufhin der Zubringerarm von neuem in seine vorgeschobene Greifposition verstellt wird. Dies bietet den Vorteil, dass keine weiteren Auslöseeinrichtungen betätigt werden müssen, um den Zubringerarm nach vorne zu verstellen.

Falls jedoch der Sicherheitsgurt bereits von der Person ergriffen worden ist und die Schlosszunge des Sicherheitsgurtes im zugeordneten Schloss eingerastet ist, ist ein Verstellen des Zubringerarmes nach vorne in die Greifposition unterbunden. Daher kann die Person bei angelegtem und gesichertem Sicherheitsgurt jederzeit in den Überwachungsbereich greifen, ohne dass der Zubringerarm nach vorne in die Greifposition verstellt wird.

Bei dem Bewegungsmelder kann es sich um einen berührungslos arbeitenden Sensor handeln, beispielsweise um einen optischen Sensor oder auch um einen Ultraschall-Sensor. Derartige Sensoren besitzen einen etwa kegelförmigen Überwachungsbereich, innerhalb dem Bewegungen erfasst werden können. Zweckmäßig sitzt der Bewegungsmelder im Bereich der seitlichen Innenverkleidung des Fahrzeuges hinter dem Fahrersitz beziehungsweise gegenüberliegend hinter dem Beifahrersitz und besitzt einen nach vorne ausstrahlenden Überwachungsbereich.

Gemäß einer bevorzugten Weiterbildung ist mindestens ein weiterer Sensor zum Erkennen eines definierten Betriebszustandes vorgesehen, wobei der Zubringerarm nur für den Fall in die Greifposition verstellt wird, dass dieser weitere Sensor den festgelegten Betriebszustand erkennt. Es kann sich hierbei um einen Türkontaktsensor handeln, mit dessen Hilfe der Schließzustand der benachbarten Fahrzeugtür überwacht werden kann, wobei nur bei geschlossener Fahrzeugtür der Zubringerarm in die Greifposition verstellt werden kann.

Als weiterer Sensor kann ein Sitzlehnensensor vorgesehen sein, mit dessen Hilfe ermittelt werden kann, ob die Sitzlehne eingerastet ist. Ein Verstellen des Zubringerarms in die Greifposition ist nur möglich, falls die Sitzlehne eine Rastposition einnimmt.

Als Sensoreinrichtung, welche geeignet ist, definierte Bewegungen eines Körperteiles eines Fahrzeuginsassen in einem Fahrzeug zu detektieren, kann zusätzlich oder alternativ zu dem vorstehend genannten Bewegungsmelder auch ein sogenannter Gestiksensor eingesetzt werden, der ein Sensorsignal für den Fall erzeugt, dass das erfasste Körperteil eine für eine bestimmte Situation typische Bewegung ausführt, beispielsweise für eine definierte Verweilzeit sich im Überwachungsbereich aufhält. Mit Hilfe einer derartigen Sensoreinrichtung ist es möglich, vorab festgelegte Bewegungsabläufe beziehungsweise Gesten zu erkennen, die für bestimmte Situationen typisch sind, beispielsweise das Ergreifen des Gurtes, woraufhin der Gestiksensor ein Sensorsignal erzeugt, das eine bestimmte, dem erkannten Bewegungsablauf entsprechende Folge auslöst. Wird zum Beispiel ein derartiger Sensor in einem Gurtbringersystem in einem Fahrzeug verwendet, bei dem der Überwachungsbereich den Raum zwischen Türinnenseite und benachbarter Sitzlehne erfasst, so kann der den Sicherheitsgurt führende Zubringerarm in eine nach vorne verlagerte Greifposition verstellt werden für den Fall, dass der Gestiksensor eine definierte, typische Bewegung erkannt hat.

Generell ist eine derartige Sensoreinrichtung aber auch für eine anderweitige Bewegungserkennung einsetzbar, sofern die zu überwachende Bewegung typische Merkmale aufweist, anhand derer die Bewegung eindeutig erkannt werden kann. Alternativ oder kumulativ zu der Verweilzeit kann als typisches Merkmal die Geschwindigkeit des sich im Überwachungsbereich bewegenden Körperteiles und/oder die Bewegungsrichtung erfasst werden. Sämtliche typischen Merkmale sind parametrierbar.

Weitere Vorteile und zweckmäßige Ausführungen sind den weiteren Ansprüchen, der Figurenbeschreibung und den Zeichnungen zu entnehmen. Es zeigen:
- Fig. 1: eine Seitenansicht des Fahrzeuginnenraums eines Kraftfahrzeuges, mit einem an der Innenwand des Fahrzeuginsassenraumes angeordneten Gurtbringersystem, das als Sensoreinrichtung einen Bewegungsmelder umfasst, dessen Überwachungsbereich den Raum zwischen Türinnenseite und unmittelbar benachbarter Sitzlehne erfasst, und
- Fig. 2: eine Ansicht auf den Fahrzeuginnenraum von oben.

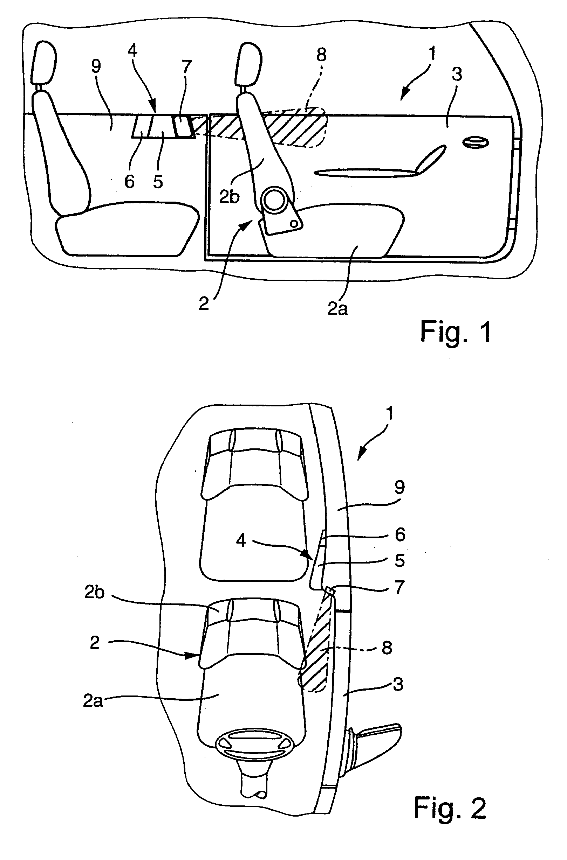

Bei dem in Fig. 1 und 2 dargestellten Kraftfahrzeug 1 handelt es sich insbesondere um einen Personenwagen. Dargestellt ist ein Gurtbringersystem 4, welches einen karosserieseitig befestigten Zubringerarm 5 sowie eine dem Zubringerarm zugeordnete Antriebseinheit 6 umfasst, wobei der Zubringerarm 5 einen nicht dargestellten Sicherheitsgurt mit einer Schlosszunge führt, mit dem sich eine auf dem Vordersitz 2 befindliche Person festschnallen kann. Dem Gurtbringersystem 4 ist weiterhin ein Bewegungsmelder 7 zugeordnet, bei dem es sich um einen optischen Sensor oder um einen Ultraschallsensor handelt, der einen nach vorne in Fahrzeuglängsrichtung gerichteten Überwachungskegel ausstrahlt, der einen Überwachungsbereich 8 bildet, innerhalb dem Bewegungen sensorisch erfasst werden können. Das gesamte Gurtbringersystem 4 befindet sich unmittelbar hinter der Fahrertür 3 und hinter dem Vordersitz 2. Das Gurtbringersystem 4 ist in einem seitlichen Karosserieabschnitt 9 angeordnet, an dem sich üblicherweise auch die B-Säule des Fahrzeuges befindet.

Der von dem Bewegungsmelder 7 erfasste, keulen- oder kegelförmige Überwachungsbereich 8 erstreckt sich zwischen der Innenverkleidung der Fahrzeugtür 3 und der Seitenkante der unmittelbar der Tür 3 zugewandten Sitzlehne 2b des Vordersitzes 2. Sobald eine auf dem Vordersitz 2 befindliche Person in den Überwachungsbereich 8 hineingreift, wird ein Sensorsignal erzeugt, das in einer Regel- und Steuereinheit weiterverarbeitet wird. Erfindungsgemäß ist vorgesehen, dass im Falle einer detektierten Bewegung innerhalb des Überwachungsbereiches 8 das dabei erzeugte Sensorsignal zu einer Betätigung der Antriebseinheit 6 führt, woraufhin der Zubringerarm 5, der in Fig. 1 in seiner zurückgezogenen Position dargestellt ist, nach vorne -in Fahrzeuglängsrichtung gesehen- ausgestreckt wird und eine Greifposition einnimmt, in der der Sicherheitsgurt bzw. die Schlosszunge, welcher beziehungsweise welche am Zubringerarm 5 geführt ist, von der auf dem Vordersitz befindlichen Person bequem ergriffen werden kann.

Die Verlagerung des Zubringerarms aus seiner Bereitschaftsposition (Nichtgebrauchsposition) in seine nach vorne verlagerte Greifposition (Gebrauchsposition) kann -je nach konstruktiver Ausführungsform- entlang einer geradlinigen oder gekrümmten Bewegungsbahn oder aber mittels einer Schwenkbewegung um eine definierte Achse erfolgen.

Es kann zweckmäßig sein, weitere Sensoren im Fahrzeug vorzusehen, um weitere Betriebszustände erfassen zu können, welche vorliegen müssen, damit der Zubringerarm 5 in die nach vorne verstellte Greifposition überführt wird. Hierbei kann es sich beispielsweise um einen Türkontaktsensor handeln, mit dessen Hilfe der Schließzustand der Fahrzeugtür 3 festgestellt werden kann, wobei das vom Türkontaktsensor gelieferte Signal in der Weise weiterverarbeitet wird, dass der Zubringerarm 5 seine Greifposition nur für den Fall einnehmen darf, dass die Fahrzeugtür geschlossen ist.

Als weitere Bedingung für die Aktivierung des Gurtbringersystems kann festgelegt werden, dass die Sitzlehne 2b des Vordersitzes 2 gegenüber dem Sitzkissen 2a fest eingerastet sein muss, was ebenfalls sensorisch erfasst werden kann, beispielsweise über einen Mikroschalter.

Außerdem kann die Aktivierung des Gurtbringersystems davon abhängig gemacht werden, dass der Zündschlüssel des Kraftfahrzeugs bereits in das Zündschloss eingesteckt worden ist und gegebenenfalls auch bereits die Zündposition eingestellt worden ist.

Schließlich wird die Aktivierung zweckmäßig auch davon abhängig gemacht, dass die Schlosszunge des Sicherheitsgurts nicht bereits in das Gurtschloss eingesteckt worden ist. Auch dies kann sensorisch erfasst werden.

Nachdem alle Bedingungen für die Aktivierung des Gurtbringersystems erfüllt sind, wird der Zubringerarm 5 durch eine Betätigung der Antriebseinheit 6 in seine nach vorne ragende Greifposition verstellt, in der der Zubringerarm zweckmäßig für eine bestimmte Zeitspanne gehalten wird. Innerhalb dieser Zeitspanne kann die auf dem Sitz befindliche Person den Sicherheitsgurt, welcher am Zubringerarm geführt ist, bequem ergreifen. Nach Ablauf der definierten Zeitspanne wird der Zubringerarm wieder in seine zurückgezogene Position verstellt, unabhängig davon, ob der Sicherheitsgurt von der Person ergriffen worden ist oder nicht.

Als Bewegungsmelder kann auch ein Gestiksensor eingesetzt werden, der ein Sensorsignal für den Fall erzeugt, dass ein Körperteil im Überwachungsbereich detektiert wird, das beispielsweise sich für eine Mindest-Verweilzeit im Überwachungsbereich aufhält oder sich mit einer bestimmten Geschwindigkeit entlang einer definierten Bewegungsbahn bewegt. Dies hat den Vorteil, dass eine typische Bewegung zum Ergreifen des Sicherheitsgurtes von anderen Bewegungen, welche nicht dem Ergreifen des Sicherheitsgurtes dienen, unterschieden werden kann, so dass eine Verstellung des Zubringerarms auch nur für den Fall erfolgt, dass die Person im Fahrzeug tatsächlich den Gurt ergreifen möchte.

Um eine derartige Bewegung mit noch größerer Sicherheit erfassen zu können, kann es zweckmäßig sein, zusätzlich zur Verweilzeit weitere Merkmale mittels des Gestiksensors zu überwachen. Hierbei handelt es sich insbesondere um die Geschwindigkeit des Armes der den Gurt ergreifenden Person, wobei eine Mindestgeschwindigkeit vorgebbar ist. Gegebenenfalls kann zusätzlich beziehungsweise alternativ die Bewegungsrichtung des Armes überwacht werden, wobei zur Signalauslösung eine definierte Bewegungsrichtung durchgeführt werden muss. Mit anderen Worten, nur das Eingreifen in den Überwachungsbereich aus einer bestimmten Richtung und die Verlagerung des Körperteils innerhalb des Überwachungsbereichs in eine bestimmte Richtung führt zur Signalauslösung.

Zusammenfassend bleibt festzuhalten, dass der Gestiksensor gegenüber dem typischen Bewegungsmelder einen verbesserten Komfort bietet, da eine Aktivierung des Zubringerarms ausgeschlossen werden kann, wenn beispielsweise die auf dem Fahrersitz befindliche Person ihre Schulter in den Überwachungsbereich bewegt. Der Gestiksensor kann diese, die Aktivierung des Zubringerarms gerade eben nicht auslösende Bewegung von der, einer Aktivierung des Zubringerarms signalisierende, typischen Bewegung unterscheiden.

## Patentansprüche

1. Gurtbringersystem in einem Fahrzeug, mit einem von einer Antriebseinheit (6) beaufschlagten und einen Sicherheitsgurt führenden Zubringerarm (5), der zwischen einer Bereitschaftsposition und einer Greifposition verstellbar ist, und mit einer Sensoreinrichtung zum Detektieren eines Fahr- und/oder Betriebszustandes, in welchem der Zubringerarm in die Greifposition zu überführen ist,
**dadurch gekennzeichnet,**
**dass** die Sensoreinrichtung einen Bewegungsmelder (7) umfasst, dessen Überwachungsbereich (8) den Raum zwischen Türinnenseite und benachbarter Sitzlehne (2b) erfasst, wobei für den Fall, dass eine Bewegung im Überwachungsbereich (8) festgestellt wird, ein Sensorsignal erzeugbar ist, aufgrund dessen die Antriebseinheit (6) betätigbar und der Zubringerarm (5) in die Greifposition überführbar ist.

2. Gurtbringersystem nach Anspruch 1,
**dadurch gekennzeichnet,**
**dass** der Bewegungsmelder (7) als optischer Sensor ausgebildet ist.

3. Gurtbringersystem nach Anspruch 1,
**dadurch gekennzeichnet,**
**dass** der Bewegungsmelder (7) als Ultraschall-Sensor ausgebildet ist.

4. Gurtbringersystem nach einem der Ansprüche 1 bis 3,
**dadurch gekennzeichnet,**
**dass** mindestens ein weiterer Sensor zum Erkennen eines definierten Betriebszustandes vorgesehen ist, wobei der Zubringerarm (5) nur für den Fall in seine Greifposition zu verstellen ist, dass der weitere Sensor den definierten Betriebszustand erkennt.

5. Gurtbringersystem nach Anspruch 4,
**dadurch gekennzeichnet,**
**dass** ein Türkontaktsensor zum Detektieren des Schließzustandes einer Fahrzeugtür (3) vorgesehen ist.

6. Gurtbringersystem nach Anspruch 4 oder 5,
**dadurch gekennzeichnet,**
**dass** ein Sitzlehnensensor vorgesehen ist, über den zu detektieren ist, ob die Sitzlehne (2b) eingerastet ist.

7. Gurtbringersystem nach einem der Ansprüche 1 bis 6,
**dadurch gekennzeichnet,**
**dass** ein Gurtschlosssensor zum Detektieren des Schließzustandes des Sicherheitsgurtes vorgesehen ist.

8. Gurtbringersystem nach einem der Ansprüche 1 bis 7,
**dadurch gekennzeichnet,**
**dass** der Zubringerarm (5) im Falle einer festgestellten Bewegung im Überwachungsbereich (8) in die Greifposition bewegt wird, für einen vorbestimmten Zeitraum in Greifposition verbleibt und nach Ablauf dieses Zeitraumes wieder in seine Bereitschaftsposition verfahren wird.

9. Gurtbringersystem nach einem der Ansprüche 1 bis 8,
**dadurch gekennzeichnet,**
**dass** die Sensorseinrichtung anstelle des Bewegungsmelders (7) oder zusätzlich zum Bewegungsmelder (7) einen Gestiksensor nach einem der Ansprüche 10 bis 13 aufweist.

10. Sensoreinrichtung zur Gestenerkennung, insbesondere in einem Fahrzeug,
**gekennzeichnet durch**
einen Gestiksensor zur Detektierung eines Körperteils in einem vom Gestiksensor erfassten Überwachungsbereich (8), wobei im Gestiksensor ein Sensorsignal für den Fall erzeugbar ist, dass das detektierte Körperteil eine für eine bestimmte Situation typische Bewegung ausführt.

11. Sensoreinrichtung nach Anspruch 10,
**dadurch gekennzeichnet,**
**dass** im Gestiksensor ein Sensorsignal für den Fall erzeugbar ist, dass das detektierte Körperteil sich für eine bestimmte Verweilzeit im Überwachungsbereich aufhält.

12. Sensoreinrichtung nach Anspruch 10 oder 11,
**dadurch gekennzeichnet,**
**dass** im Gestiksensor ein Sensorsignal für den Fall erzeugbar ist, dass das detektierte Körperteil sich mit einer bestimmten Geschwindigkeit bewegt.

13. Sensoreinrichtung nach einem der Ansprüche 10 bis 12,
**dadurch gekennzeichnet,**
**dass** im Gestiksensor ein Sensorsignal für den Fall erzeugbar ist, dass die Bewegungsrichtung des detektierten Körperteils einer definierten Richtung entspricht.

14. Verwendung der Sensoreinrichtung nach einem der Ansprüche 10 bis 13 in einem Gurtbringersystem nach einem der Ansprüche 1 bis 9.
